(19) Europäisches Patentamt
European Patent Office
Office européen des brevets

(11) **EP 4 263 167 B1**

(12) **FASCICULE DE BREVET EUROPÉEN**

(45) Date de publication et mention
de la délivrance du brevet:
**19.03.2025 Bulletin 2025/12**

(21) Numéro de dépôt: **21851828.0**

(22) Date de dépôt: **15.12.2021**

(51) Classification Internationale des Brevets (IPC):
**B29B 15/12** *(2006.01)*

(52) Classification Coopérative des Brevets (CPC):
**B29B 15/12;** B29K 2233/12; B29K 2271/00;
B29K 2277/00; B29K 2279/085; B29K 2281/04;
B29K 2301/12

(86) Numéro de dépôt international:
**PCT/FR2021/052332**

(87) Numéro de publication internationale:
**WO 2022/129781 (23.06.2022 Gazette 2022/25)**

(54) **PROCÉDÉ DE FABRICATION D'UN MATÉRIAU FIBREUX EN FIBRES CONTINUES IMPRÉGNÉ DE POLYMÈRE THERMOPLASTIQUE**

VERFAHREN ZUR HERSTELLUNG EINES FASERMATERIALS AUS ENDLOSFASERN, DAS MIT EINEM THERMOPLASTISCHEN POLYMER IMPRÄGNIERT IST

METHOD FOR MANUFACTURING A FIBROUS MATERIAL WHICH IS MADE OF CONTINUOUS FIBRES AND IMPREGNATED WITH A THERMOPLASTIC POLYMER

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **17.12.2020 FR 2013435**

(43) Date de publication de la demande:
**25.10.2023 Bulletin 2023/43**

(73) Titulaire: **ARKEMA FRANCE**
**92700 Colombes (FR)**

(72) Inventeurs:
• **SAVART, Thibaut**
**64170 Lacq (FR)**
• **BABEAU, Arthur**
**64170 Lacq (FR)**
• **SALINIER, Axel**
**64170 Lacq (FR)**

(74) Mandataire: **Arkema Patent**
**Arkema France**
**DRD-DPI**
**420, rue d'Estienne d'Orves**
**92705 Colombes Cedex (FR)**

(56) Documents cités:
**EP-A1- 1 172 191     EP-A1- 3 170 638
US-A- 5 895 622**

**Description**

La présente invention concerne un procédé de fabrication d'un matériau fibreux en fibres continues imprégné de polymère thermoplastique.

Plus particulièrement, l'invention se rapporte à un procédé de fabrication d'un matériau fibreux imprégné comprenant un matériau fibreux en fibres continues et au moins une matrice polymère thermoplastique, ledit matériau fibreux étant ensimé par au moins un polymère thermoplastique d'ensimage et présentant, avant sa pré-imprégnation par ledit polymère thermoplastique, une largeur initiale l, et comprenant une étape d'épanouissement dudit matériau fibreux avant une étape de pré-imprégnation. Elle se rapporte également à l'utilisation du procédé ci-dessus pour la fabrication de rubans calibrés adaptés à la fabrication de pièces composites en trois dimensions et aux pièces composites en tant que telles.

Dans la présente description, on entend par « matériau fibreux » un assemblage de fibres de renfort. Avant sa mise en forme, il se présente sous forme de mèches. Après sa mise en forme, il se présente sous forme de rubans (ou tapes), de bandes, ou de nappes. Leur assemblage constitue un renfort unidirectionnel ou un tissu ou un non tissé (NCF).

Dans la présente description, on utilise le terme « bande » pour désigner des bandes de matériau fibreux dont la largeur est supérieure ou égale à 400mm. On utilise le terme « ruban » pour désigner des rubans de largeur calibrée et inférieure ou égale à 400mm.

La qualité d'imprégnation de polymères thermoplastiques, en particulier de viscosité importante, sur des fibres de renforts continues pour en faire des rubans ou tapes pré-imprégnés thermoplastiques passe par une parfaite maitrise de la quantité de polymère imprégné et de la qualité de répartition de ce polymère au sein de la mèche de fibres de renfort continue au cours du procédé d'imprégnation.

Les document EP1172191 décrit une pièce composite comprenant un ensimage et une matrice thermoplastique et un procédé de fabrication de ladite pièce.

Le document US5895622 décrit aussi une pièce composite comprenant un ensimage et une matrice thermoplastique et un procédé de fabrication de ladite pièce.

Le document EP3170638 décrit également une pièce composite comprenant un ensimage et une matrice thermoplastique et un procédé de fabrication de ladite pièce.

Plusieurs demandes de brevets dans l'art antérieur telles que WO2018/229114, WO2018/234436, WO2018/234439, EP 2788408 décrivent que l'épanouissement des fibres est un paramètre essentiel pour obtenir une qualité homogène d'imprégnation de polymère au sein des fibres sur le tape final. En particulier, si on se réfère aux procédés conventionnels d'imprégnation comme la dispersion aqueuse ou solvantée de poudres, mais aussi et surtout au procédé de pré-imprégnation en lit fluidisé de poudres, il est primordial d'avoir un taux d'épanouissement de la mèche de fibre important lors de l'étape d'emport de polymère ; c'est-à-dire lors de l'immersion dans la cuve de pré-imprégnation. Cet épanouissement doit être non seulement important mais aussi homogène dans la largeur de la mèche de fibre et constant au cours du temps dans la cuve de pré-imprégnation pour s'assurer d'une bonne qualité et d'une bonne constance d'imprégnation du tape final.

De manière générale l'épanouissement de fibres de renfort, comme les fibres de carbone, est généré via des systèmes mécaniques, pneumatiques et/ou vibratoires. Le principal inconvénient de ces méthodes est de générer du désalignement de fibres au sein d'une mèche (épanouissement par soufflerie ou aspiration) et/ou une dégradation mécanique des fibres par application d'une contrainte transverse trop élevée.

L'utilisation de ces systèmes conventionnels n'est généralement pas suffisante pour maintenir un épanouissement suffisant et suffisamment homogène et constant, en particulier pour des fibres ensimées. C'est d'autant plus vrai pour des fibres ayant un ensimage thermoplastique. En effet, ce type d'ensimage thermoplastique est souvent dense et élastique et n'accepte donc que peu de déformation sous une contrainte externe. En outre, cet ensimage jouant le rôle de liant à température ambiante entre les filaments de la mèche de fibres, il est très compliqué d'épanouir fortement une mèche ayant ce type d'ensimage. L'épanouissement généré par ce type de systèmes conventionnels sur des mèches de fibres ensimées thermoplastiques est donc faible, inhomogène dans la largeur de la mèche de fibre et il n'est qu'éphémère et difficilement conservable. Il n'est donc pas constant au cours du temps.

Cet épanouissement doit être généré au plus proche de la cuve de pré-imprégnation pour être profitable et doit en outre être maintenu à un certain niveau lors de cette étape de pré-imprégnation sans pour autant dégrader mécaniquement la fibre ou désaligner les fibres au sein de la mèche. Par ailleurs, les systèmes actuellement utilisés sont généralement encombrants et/ou inadaptés aux conditions et environnements de travail (poudre, solvant, eau, température etc...). Ils ne peuvent donc pas être au plus près voire à l'intérieur du système de pré-imprégnation.

Il est donc nécessaire de pouvoir disposer d'un procédé permettant d'éviter les problèmes énumérés ci-dessus.

La présente invention concerne un procédé de fabrication d'un matériau fibreux imprégné comprenant un matériau fibreux en fibres continues et au moins une matrice polymère thermoplastique, caractérisé en ce que ledit matériau fibreux est ensimé par un polymère thermoplastique d'ensimage et présente, avant sa pré-imprégnation par ledit polymère thermoplastique, une largeur initiale l, ledit procédé comprenant une étape d'épanouissement dudit matériau fibreux avant une étape de pré-imprégnation, ladite étape d'épanouissement étant effectuée au moyen d'au moins deux pièces d'embarrage (E) et d'au moins un système de chauffage SC permettant le chauffage desdites pièces d'embarrages et/ou dudit matériau fibreux, ledit épanouissement après défilement dudit matériau fibreux au contact desdites pièces d'embarrage étant compris de 1,5 à 5 fois la largeur initiale l, ledit matériau fibreux épanoui étant refroidi en dessous de la Tg du polymère thermoplastique d'ensimage au moyen d'un système de refroidissement avant sa mise en contact avec ladite matrice polymère thermoplastique dans le système de pré-imprégnation pour effectuer l'étape de pré-imprégnation, l'épanouissement étant constant et représentant toujours 1,5 à 5 fois la largeur initiale l lors de la mise en contact dudit matériau fibreux avec ladite matrice polymère thermoplastique dans le système de pré-imprégnation.

Le terme « ensimage » désigne les traitements de surface appliqués aux matériaux fibreux lors de leur fabrication de nature organique (type résine thermodurcissable ou résine thermoplastique)

Dans le cadre de la présente invention, ledit matériau fibreux est donc ensimé avec une résine thermoplastique qui peut être peuvent être semi-cristalline (ensimages base PEEK, PEKK, polyamide par exemple) ou amorphe (ensimages base PEI ou polyamide par exemple).

La résine thermoplastique est notamment un polyamide PA6 ou PA66, généralement de faible masse molaire. L'ensimage peut être aussi de type polypropylène (PP), en particulier pour les fibres de verre.

Ledit matériau fibreux comprend jusqu'à 3 % en poids de ladite résine thermoplastique d'ensimage.

Le terme « épanouissement » désigne le facteur d'augmentation de la largeur du matériau fibreux (ou mèche) par rapport à la largeur l initiale de ladite mèche, c'est-à-dire lorsque ladite mèche pénètre dans le système assurant l'étape d'épanouissement. Il est bien évident qu'il s'agit d'une largeur moyenne (qu'il s'agisse de la largeur initiale ou de la largeur après épanouissement) de la mèche, à plat, déterminée en moyennant des mesures obtenues sans contact (LASER, LED etc...) sur plusieurs bobines. La largeur initiale ne correspond pas obligatoirement à la largeur de la mèche à la sortie des dévidoirs 11.

L'étape d'épanouissement est effectuée avant l'étape de pré-imprégnation, ce qui signifie que l'étape d'épanouissement est effectuée soit en amont du système de pré-imprégnation, et donc à l'extérieur dudit système, soit dans le système de pré-imprégnation et donc à l'intérieur mais avant mise en contact du matériau fibreux avec le polymère thermoplastique sous une forme solide, liquide (en fusion ou dissoute) ou en suspension.

L'épanouissement est effectué au niveau des différentes pièces d'embarrage E présentes qui sont situées, comme indiqué ci-dessus, à l'extérieur ou à l'intérieur du système de pré-imprégnation au moyen d'un système de chauffage SC qui permet de chauffer soit le matériau fibreux, soit lesdits embarrages E, soit les deux.

L'épanouissement est fonction du matériau fibreux utilisé et des grammages linéiques ou titre ou titrage ou « tex » différents et/ou être du nombre dans les mèches.

Lorsque ledit matériau fibreux défile au contact desdits embarrages E, il est chauffé par ledit système de chauffage soit directement par ledit système de chauffage SC qui est alors placé au-dessus des embarrages, soit par ladite pièce d'embarrage qui est alors elle-même équipée d'un système de chauffage SC ou par les deux.

Le chauffage dudit matériau fibreux permet à l'ensimage de se ramollir et conduisant ainsi à un épanouissement plus large dudit matériau fibreux, épanouissement qui est alors conservé tout le long de ladite étape d'épanouissement. L'épanouissement obtenu après passage sur la dernière pièce d'embarrage est fonction du matériau utilisé mais le facteur d'épanouissement après passage sur la dernière pièce d'embarrage est compris de 1,5 à 5 fois la largeur du matériau fibreux qui est rentrée en contact avec ladite première pièce d'embarrage.

La température de chauffage utilisée doit être au-dessus de la Tg dudit polymère thermoplastique pour provoquer le ramollissement de l'ensimage mais ne doit pas dépasser la Tf si le polymère thermoplastique utilisé est semi-cristallin. En tout état de cause, elle ne doit pas dépasser 200°C pour des fibres à ensimage de type polyamide. La température est mesurée via un pyromètre ou une caméra thermique.

La Tf est déterminée par analyse calorimétrique différentielle (DSC) selon la norme ISO 11357-3 : 2013 et la Tg est déterminée par analyse calorimétrique différentielle (DSC) selon la norme ISO 11357-2 : 2013.

Avant mise en contact dudit matériau fibreux épanoui avec le système de pré-imprégnation, c'est-à-dire avant mise en contact du matériau fibreux ensimé, chauffé et épanoui avec la matrice polymère thermoplastique sous une forme solide, liquide (en fusion ou dissoute) ou en suspension, en particulier sous une forme solide en poudre, ledit matériau fibreux ensimé, chauffé et épanoui est refroidi par un système de refroidissement qui peut être l'air ambiant ou de l'air pulsé.

Le refroidissement est effectué jusqu'à ce que la température dudit matériau fibreux soit inférieure à la Tg dudit polymère thermoplastique d'ensimage. La température de refroidissement est mesurée via un pyromètre ou une caméra thermique.

L'épanouissement dudit matériau fibreux après refroidissement lors de la mise en contact dudit matériau fibreux avec ledit polymère thermoplastique dans le système de pré-imprégnation est alors toujours compris de 1,5 à 5 fois la largeur initiale l dudit matériau fibreux. L'épanouissement dudit matériau fibreux est donc constant entre la fin du défilement dudit matériau fibreux au contact desdits embarrages et la mise en contact dudit matériau fibreux avec ladite matrice polymère thermoplastique dans le système de pré-imprégnation.

Le terme « constant » signifie que l'épanouissement ne varie pas de plus de 10% entre la fin du défilement dudit matériau fibreux au contact desdits embarrages et la mise en contact dudit matériau fibreux avec ladite matrice polymère thermoplastique dans le système de pré-imprégnation.

Cet épanouissement est aussi homogène dans la largeur de la mèche de fibre et constant au cours du temps dans la cuve de pré-imprégnation pour s'assurer d'une bonne qualité et d'une bonne constance d'imprégnation du matériau fibreux imprégné final.

Les Inventeurs ont donc trouvé de manière inattendue que le chauffage d'un matériau fibreux ensimé par un polymère thermoplastique et/ou le chauffage des pièces d'embarrages avec lesquelles ledit matériau fibreux ensimé est en contact permettait d'une part d'épanouir ledit matériau fibreux de manière plus importante que sans chauffage, d'autre part de conserver ledit épanouissement constant et homogène durant l'étape d'épanouissement mais aussi de conserver cet épanouissement après refroidissement et lors de la mise en contact du dit matériau fibreux ensimé avec ladite matrice polymère thermoplastique.

**S'agissant des pièces d'embarrage**

L'expression « pièces d'embarrage (E) » signifie tout système sur lequel la mèche a la possibilité de défiler. Les au moins deux pièces d'embarrage (E) peuvent avoir n'importe quelle forme à partir du moment où la mèche peut défiler dessus. Elles peuvent être fixes ou en rotation (ou rotatives), préférentiellement en co-rotation et/ou alternativement en contra-rotation contrôlée.

Dans un mode de réalisation, ladite pièce d'embarrage est en rotation contrôlée, en particulier de telle manière que la vitesse linaire (autrement dit la vitesse tangentielle) à la surface de l'embarrage soit inférieure à 2 fois la vitesse de la mèche ou supérieure à 2 fois la vitesse de la mèche.

Cela signifie, pour la rotation contrôlée, que la vitesse tangentielle à la surface de l'embarrage (E) est soit égale, soit supérieure, soit inférieure à la vitesse de la mèche. Avantageusement, la vitesse linaire (autrement dit la vitesse tangentielle) à la surface de l'embarrage est inférieure à 2 fois la vitesse de la mèche ou supérieure à 2 fois la vitesse de la mèche.

Plus avantageusement, la vitesse linaire (autrement dit la vitesse tangentielle) à la surface de l'embarrage est inférieure à 2 fois la vitesse de la mèche.

Dans un mode de réalisation, la vitesse tangentielle des embarrages est comprise de 0,5 à 1,5 m/ mn, la vitesse de la mèche étant comprise de 5 à 15 m/mn.

Le système de chauffage est tout système dégageant de la chaleur ou émettant un rayonnement susceptible de chauffer le matériau fibreux et/ou la pièce d'embarrage (E). Les pièces d'embarrage (E) sont par conséquent conductrices ou absorbent le rayonnement émis par la chaleur lorsqu'elles sont chauffées en même temps que le matériau fibreux.

Lorsque seul le matériau fibreux est chauffé, les pièces d'embarrage sont alors non conductrice de la chaleur

L'expression « pièces d'embarrage (E) conductrice de la chaleur » signifie que la pièce d'embarrage (E) est constituée d'un matériau capable d'absorber et de conduire la chaleur et ainsi de s'échauffer.

L'expression « pièces d'embarrage (E) non conductrices de la chaleur » signifie que la pièce d'embarrage (E) est constituée d'un matériau incapable d'absorber et de conduire la chaleur empêchant ainsi tout échauffement desdites pièces d'embarrage (E).

Lesdites au moins deux pièces d'embarrage (E) sont situées ou comprises dans l'environnement du système de chauffage, c'est-à-dire qu'elle ne sont pas à l'extérieur du système de chauffage.

Lesdites au moins deux pièces d'embarrage (E) sont donc dans leur totalité à l'intérieur du système de chauffage mais elles ne sont pas nécessairement surmontées par le système de chauffage.

Avantageusement ledit système de chauffage surmonte lesdites au moins deux pièces d'embarrage (E).

On ne sortirait pas du cadre de l'invention si la pièce d'embarrage (E) était positionnée dans un four comportant un système de chauffage, par exemple par IR mais que ladite pièce d'embarrage n'était pas positionnée exactement sous les éléments chauffants par exemple par IR. On ne sortirait pas de l'invention si le four comportait un mode de chauffage par convection et un système de chauffage par IR.

On ne sortirait pas de l'invention non plus si ladite pièce d'embarrage (E) placée dans ce four ou dans l'environnement de ce four, était équipée d'un moyen de chauffage autonome comme une résistance permettant de chauffer ladite pièce d'embarrage (E), indépendamment par exemple du rayonnement des lampes IR et de la convection naturelle du four et que, compte tenu la vitesse de la ligne, le polymère présent dans les rubans ou les mèches soit encore à l'état fondu lorsqu'il arrive en contact avec ladite pièce d'embarrage.

Le système de chauffage SC et les au moins deux pièces d'embarrages peuvent être situés à l'extérieur ou à l'intérieur du système de pré-imprégnation.

Lorsque le système de chauffage SC et les au moins deux pièces d'embarrages sont à l'intérieur du système de pré-imprégnation, ils ne sont pas en contact avec le polymère thermoplastique sous quelque forme qu'il soit (en poudre, en dispersion aqueuse ou solvantée ou en fusion). Le système de chauffage SC et les au moins deux pièces d'embarrages sont donc au-dessus du lit fluidisé ou de la dispersion aqueuse ou solvantée ou du système de pultrusion (voie fondue).

Dans une première variante, le système de chauffage SC et les au moins deux pièces d'embarrages sont situés à l'extérieur du système de pré-imprégnation et ladite étape de pré-imprégnation est effectuée avec un système choisi parmi un lit fluidisé, une pulvérisation par pistolet, la dispersion aqueuse et la voie fondue, notamment à grande vitesse, en particulier la pré-imprégnation est effectuée en lit fluidisé.

Dans un autre mode de réalisation de cette première variante, une seule pièce d'embarrage est présente sous le système de chauffage SC qui correspond alors à la première pièce d'embarrage, la deuxième pièce d'embarrage étant le rouleau (40) à l'entrée de la cuve.

Dans une seconde variante, le système de chauffage SC et les au moins deux pièces d'embarrages sont situés à l'intérieur du système de pré-imprégnation et ladite étape de pré-imprégnation est effectuée avec un système choisi parmi un lit fluidisé, une pulvérisation par pistolet, la dispersion aqueuse, en particulier la pré-imprégnation est effectuée en lit fluidisé.

Dans un autre mode de réalisation de cette seconde variante, une seule pièce d'embarrage est présente sous le système de chauffage SC qui correspond alors à la deuxième pièce d'embarrage, la première pièce d'embarrage étant le rouleau (40) à l'entrée de la cuve.

Dans un mode de réalisation de l'une ou l'autre des deux variantes ci-dessus lesdites au moins deux pièces d'embarrage (E) sont conductrices de la chaleur et un moyen de chauffage SC est présent et intégré audites au moins deux pièces d'embarrage (E).

Le moyen de chauffage intégré peut être une résistance qui est placée à l'intérieur des pièces d'embarrage ou les pièces d'embarrages peuvent être équipés d'une double enveloppe dans laquelle circule un fluide chauffé permettant de réguler ou thermostater la température desdites pièces d'embarrage (E).

Dans un mode de réalisation de l'une ou l'autre des deux variantes ci-dessus, lesdites au moins deux pièces d'embarrage (E) sont conductrices de la chaleur et un moyen de chauffage SC est présent au-dessus desdites au moins deux pièces d'embarrage (E) permettant de chauffer le matériau fibreux et lesdites au moins deux pièces d'embarrage (E).

Avantageusement, le système de chauffage est choisi parmi une lampe infra rouge, une lampe UV et un chauffage par convection.

Dans un mode de réalisation de l'une ou l'autre des deux variantes ci-dessus, lesdites au moins deux pièces d'embarrage (E) sont conductrices de la chaleur et un moyen de chauffage SC est présent et intégré audites au moins deux pièces d'embarrage (E) et un moyen de chauffage SC est présent au-dessus desdites au moins deux pièces d'embarrage (E) permettant de chauffer le matériau fibreux et lesdites au moins deux pièces d'embarrage (E).

Dans encore un autre mode de réalisation, au moins une des pièces d'embarrage (E) peut être refroidie pour contrôler la température du matériau fibreux et notamment de ne pas dépasser 200°C de manière à nepas dégrader l'ensimage dudit matériau fibreux.

Le refroidissement peut être effectué par projection d'air refroidi ou par circulation d'un fluide refroidi à la température requise dans au moins une pièce d'embarrage munie d'une double enveloppe.

Dans un mode de réalisation de l'une ou l'autre des deux variantes ci-dessus, lesdites au moins deux pièces d'embarrage (E) sont non conductrices de la chaleur et un moyen de chauffage SC est présent au-dessus desdites au moins deux pièces d'embarrage (E) permettant de chauffer le matériau fibreux.

Avantageusement, les au moins deux pièces d'embarrage (E) sont des rouleaux de compression de forme convexe, concave ou cylindrique, de préférence cylindrique.

Le nombre de rouleaux en contact avec ledit matériau fibreux est compris de 2 à 20, en particulier de 2 à 12, en particulier de 2 à 9, préférentiellement de 6 à 9.

Avantageusement, la distance entre deux rouleaux adjacents est comprise de 50 à 2000$\mu$m, en particulier de 50 à 500 $\mu$m, en particulier de 50 à 120 $\mu$m. Cette distance peut être la même ou non sur la totalité des embarrages concernés ; un exemple de réalisation peut ainsi se traduire par un système ayant une distance entre deux rouleaux adjacents de 1000$\mu$m en début de système d'épanouissement (dans le sens de défilement de la mèche) et une distance entre deux rouleaux adjacents de 200$\mu$m en fin de système d'épanouissement (dans le sens de défilement de la mèche).

Avantageusement, les rouleaux sont cylindriques et présentent un diamètre D compris de 5 à 100mm, en particulier de 5 à 50 mm, notamment de 10 à 30 mm.

Avantageusement, le dernier rouleau du système d'épanouissement lorsque lesdits rouleaux sont à l'extérieur ou lorsqu'un seul rouleau est à l'extérieur, le second étant le bord de ladite cuve, est à une distance de la cuve de fluidisation et donc du rouleau du bord de la cuve inférieure ou égale à 30 cm. Au-delà de 30 cm, l'épanouissement n'est plus constant et diminue lorsque le matériau fibreux pénètre dans ladite cuve.

On peut simplement calculer i la distance entre deux rouleaux adjacents de même diamètre ($\mu$m) :

## [Math 1]

$$i = ((\sqrt{L^2 + L'^2}) - D \times 10000),$$

i, exprimé en $\mu$m, étant forcément un nombre positif, les rouleaux ne pouvant pas s'interpénétrer.

> L : Distance entre les centres des deux jeux de rouleaux (mm)
> L': distance entre chaque rouleau adjacent (mm)
> D : diamètre des rouleaux (mm)

Cette équation peut s'appliquer quel que soit le nombre de rouleaux, à partir du moment où ils ont le même diamètre.

Pour des rouleaux de diamètres différents mais chaque rouleau de chaque rangée étant au même niveau et présentant le même diamètre, l'équation est alors :

## [Math 2]

$$L^2 + L'^2 = ((D1 + D2)/2 + i)^2$$

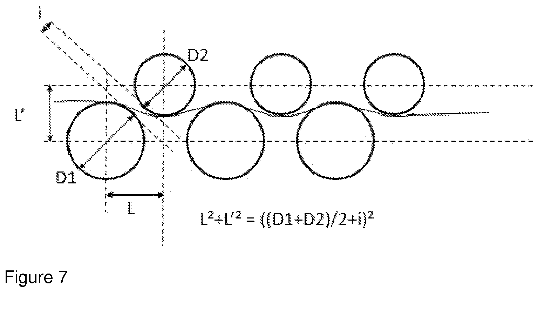

> D1 : diamètre des rouleaux de la rangée inférieure de la figure 7 (mm)
> D2 : diamètre des rouleaux de la rangée supérieure de la figure 7 (mm)

Par ailleurs, ledit matériau fibreux de par la présence des pièces d'embarrage au plus près du système de pré-imprégnation, et notamment au plus près de la mise en contact dudit matériau fibreux avec ledit polymère thermoplastique de la matrice, n'est pas désaxé et le nombre de pièces d'embarrage évite de casser la fibre.

Dans un mode de réalisation, lesdits rouleaux de compression sont en co-rotation et/ou en contra-rotation.

Dans un autre mode de réalisation, lesdits rouleaux de compression sont vibrants.

Lesdits rouleaux de compression peuvent présenter un traitement de surface et/ou une rugosité apparente de surface minimisant les frottements avec les fibres de renfort.

On limite ainsi les efforts de tension/frottements et la dégradation mécanique de la fibre par le choix d'un traitement de surface des rouleaux de compression ce qui minimisant les frottements avec la fibre.

Le traitement de surface peut être du topocrom®, un oxyde d'aluminium et de titane déposé sur les rouleaux. Ces traitements peuvent jouer sur la rugosité apparente du rouleau de compression et/ou la nature « physico-chimique » des contacts (lubrification naturelle).

Avantageusement, lesdits rouleaux sont distants l'un de l'autre d'une distance inférieure à 30 cm, en particulier comprise de D/2 + 1 mm à 30 cm, D étant le diamètre du rouleau.

Dans un mode de réalisation, la distance entre le dernier rouleau et un point de contact entre la fibre de renfort et un élément du procédé suivant est inférieure à 30 cm.

Cette distance permet la conservation de l'épanouissement.

La hauteur entre le système de chauffage et les embarrages est comprise de 1 à 100 cm, préférentiellement de 2 à 30 cm, en particulier de 2 à 10 cm.

Le système de chauffage peut être un système horizontal. Cependant, le ou les système(s) de chauffage peuvent être disposés verticalement avec défilement également vertical de la mèche au travers des embarrages.

**S'agissant du matériau fibreux**

Concernant les fibres de constitution dudit matériau fibreux, ce sont notamment des fibres d'origine minérale, organique ou végétale. Parmi les fibres d'origine minérale, on peut citer les fibres de carbone, les fibres de verre, de carbure de silicium, les fibres à base de basalte ou de basalte, les fibres de silice, par exemple.

Parmi les fibres d'origine organique, on peut citer les fibres à base de polymère thermoplastique ou thermodurcissable, telles que des fibres de polyamides semi-aromatiques, des fibres d'aramide ou des fibres en polyoléfines par exemple.

De préférence, elles sont à base de polymère thermoplastique amorphe et présentent une température de transition vitreuse Tg supérieure à la Tg du polymère ou mélange de polymère thermoplastique de constitution de la matrice de pré-imprégnation lorsque ce dernier est amorphe, ou supérieure à la Tf du polymère ou mélange de polymère thermoplastique de constitution de la matrice de pré-imprégnation lorsque ce dernier est semi-cristallin. Avantageusement, elles sont à base de polymère thermoplastique semi-cristallin et présentent une température de fusion Tf supérieure à la Tg du polymère ou mélange de polymère thermoplastique de constitution de la matrice de pré-imprégnation lorsque ce dernier est amorphe, ou supérieure à la Tf du polymère ou mélange de polymère thermoplastique de constitution de la matrice de pré-imprégnation lorsque ce dernier est semi-cristallin. Ainsi, il n'y a aucun risque de fusion pour les fibres organiques de constitution du matériau fibreux lors de l'imprégnation par la matrice thermoplastique du composite final.

Parmi les fibres d'origine végétale, on peut citer les fibres naturelles à base de lin, de chanvre, de lignine, de bambou, de soie notamment d'araignée, de sisal, et d'autres fibres cellulosiques, en particulier de viscose. Ces fibres d'origine végétale peuvent être utilisées pures, traitées ou bien enduites d'une couche d'enduction, en vue de faciliter l'adhérence et l'imprégnation de la matrice de polymère thermoplastique.

Le matériau fibreux peut également être un tissu, tressé ou tissé avec des fibres.

Il peut également correspondre à des fibres avec des fils de maintien.

Ces fibres de constitution peuvent être utilisées seules ou en mélanges. Ainsi, des fibres organiques peuvent être mélangées aux fibres minérales pour être pré-imprégnée de polymère thermoplastique et former le matériau fibreux pré-imprégné.

De préférence le matériau fibreux est constitué par des fibres continues de carbone, de verre ou de carbure de silicium ou leur mélange, en particulier des fibres de carbone. Il est utilisé sous forme d'une mèche ou de plusieurs mèches.

Dans les matériaux imprégnés aussi appelés « prêts à l'emploi », le polymère ou mélange de polymères thermoplastiques d'imprégnation est réparti uniformément et de manière homogène autour des fibres. Dans ce type de matériau, le polymère thermoplastique d'imprégnation doit être réparti de manière la plus homogène possible au sein des fibres afin d'obtenir un minimum de porosités, c'est à dire un minimum de vides entre les fibres. En effet, la présence de porosités dans ce type de matériaux peut agir comme des points de concentrations de contraintes, lors d'une mise sous contrainte mécanique de traction par exemple, et qui forment alors des points d'initiation de rupture du matériau fibreux imprégné et le fragilisent mécaniquement. Une répartition homogène du polymère ou mélange de polymères améliore donc la tenue mécanique et l'homogénéité du matériau composite formé à partir de ces matériaux fibreux imprégnés.

Ainsi, dans le cas de matériaux imprégnés dits « prêts à l'emploi », le taux de fibres dans ledit matériau fibreux imprégné est compris de 45 à 65 % en volume, de préférence de 50 à 60% en volume, notamment de 54 à 60% en volume.

La mesure du taux d'imprégnation peut être réalisée par analyse d'image (utilisation de microscope ou d'appareil photo ou de caméra numérique, notamment), d'une coupe transversale du ruban, en divisant la surface du ruban imprégné par le polymère par la surface totale du produit (surface imprégnée plus surface des porosités). Afin d'obtenir une image de bonne qualité il est préférable d'enrober le ruban découpé dans son sens transversal dans une résine de polissage standard et de polir avec un protocole standard permettant l'observation de l'échantillon au microscope grossissement fois 6 au minimum.

Avantageusement, le taux de porosité dudit matériau fibreux imprégné est inférieur à 10%, notamment inférieur à 5%, en particulier inférieur à 2%.

Il faut noter qu'un taux de porosité nul est difficilement accessible et que par conséquent, avantageusement le taux de porosité est supérieur à 0% mais inférieur aux taux cités ci-dessus.

Le taux de porosité correspond au taux de porosité fermée et peut être déterminée soit par microscopie électronique, soit comme étant l'écart relatif entre la densité théorique et la densité expérimentale dudit matériau fibreux imprégné tel que décrit dans la partie exemples de la présente invention.

Les fibres pouvant entrer dans la composition des matériaux fibreux peuvent avoir des grammages linéiques ou titre ou titrage ou « tex » différents et/ou être en nombre différent dans les mèches. Aussi, les mèches les plus classiquement utilisées sont composées de 600 à 4800 tex pour les fibres de verre et de 3000 (3K), 6000 (6K), 12000 (12K), 24000 (24K), 48000 (48K), 50 000 (50K) ou 400 000 (400K) fibres pour les fibres de carbone. Les fibres de carbone présentent généralement un diamètre proche de 7-8 $\mu$m et les fibres de verre un diamètre d'environ 13, 15, 17 ou 20 $\mu$m par exemple.

Il est bien évident que l'épanouissement est fonction du nombre de fibres présentes dans le matériau fibreux ou la mèche.

Ainsi, pour une mèche de 12K l'épanouissement représente de 2 à 3 fois la largeur initiale l. pour une mèche de 24K l'épanouissement représente de 2 à 4 fois la largeur initiale l et pour une mèche de 50K l'épanouissement représente de 1,5 à 2,5 fois la largeur initiale l.

**S'agissant du polymère thermoplastique de la matrice**

On entend par thermoplastique, ou polymère thermoplastique, un matériau généralement solide à température ambiante, pouvant être semi-cristallin ou amorphe, et qui se ramollit lors d'une augmentation de température, en particulier après passage de sa température de transition vitreuse (Tg) et s'écoule à plus haute température lorsqu'il est amorphe, ou pouvant présenter une fusion franche au passage de sa température dite de fusion (Tf) lorsqu'il est semi-cristallin, et qui redevient solide lors d'une diminution de température en dessous de sa température de cristallisation (pour un semi-cristallin) et en dessous de sa température de transition vitreuse (pour un amorphe).

La Tg et la Tf sont déterminées par analyse calorimétrique différentielle (DSC) selon la norme 11357-2 :2013 et 11357-3 :2013 respectivement.

Concernant le polymère de constitution de la matrice de pré-imprégnation du matériau fibreux, c'est avantageusement un polymère thermoplastique ou un mélange de polymères thermoplastiques. Ce polymère ou mélange de polymères thermoplastiques peut être broyé sous forme de poudre, afin de pouvoir l'utiliser dans un dispositif tel qu'une cuve, notamment en lit fluidisé ou en dispersion aqueuse.

Le dispositif sous forme de cuve, notamment en lit fluidisé peut être ouvert ou fermé. De manière facultative, le polymère thermoplastique ou mélange de polymères thermoplastiques comprend en outre des charges carbonées, en particulier du noir de carbone ou des nanocharges carbonées, de préférence choisies parmi des nanocharges carbonées, en particulier des graphènes et/ou des nanotubes de carbone et/ou des nanofibrilles de carbone ou leurs mélanges. Ces charges permettent de conduire l'électricité et la chaleur, et permettent par conséquent de faciliter la fusion de la matrice polymère lorsqu'elle est chauffée.

Optionnellement, ledit polymère thermoplastique comprend au moins un additif, notamment choisi parmi un catalyseur, un antioxydant, un stabilisant thermique, un stabilisant UV, un stabilisant à la lumière, un lubrifiant, une charge, un plastifiant, un agent ignifugeant, un agent nucléant, un allongeur de chaîne et un colorant, un agent conducteur électrique, un agent conducteur thermique ou un mélange de ceux-ci.

Avantageusement, ledit additif est choisi parmi un agent ignifugeant, un agent conducteur électrique et un agent conducteur thermique.

Selon une autre variante, le polymère thermoplastique ou mélange de polymères thermoplastiques peut en outre comprendre des polymères à cristaux liquides ou du poly(butylène téréphtalate) cyclisé, ou des mélanges en contenant, comme la résine CBT100 commercialisée par la société CYCLICS CORPORATION. Ces composés permettent notamment de fluidifier la matrice polymère à l'état fondu, pour une meilleure pénétration au cœur des fibres. Selon la nature du polymère, ou mélange de polymères thermoplastiques, utilisé pour réaliser la matrice de pré-imprégnation, notamment sa température de fusion, on choisira l'un ou l'autre de ces composés.

Les polymères thermoplastiques entrant dans la constitution de la matrice de pré-imprégnation du matériau fibreux, peuvent être choisis parmi :

- les polymères et copolymères de la famille des polyamides (PA) aliphatiques, cycloaliphatiques ou des PA semi-aromatiques (encore dénommés polyphtalamides (PPA)),
- les PEBA,
- les polyurées, en particulier aromatiques,
- les polymères et copolymères de la famille des acryliques comme les polyacrylates, et plus particulièrement le polyméthacrylate de méthyle (PMMA) ou ses dérivés
- les polymères et copolymères de la famille des poly(aryléthercétones) (PAEK) comme le poly(étheréthercétone) (PEEK), ou les poly(aryléthercétonescétones) (PAEKK) comme le poly(éthercétonecétone) (PEKK) ou leurs dérivés,
- les polyéther-imides (PEI) aromatiques,
- les polyarylsulfures, en particulier les polyphénylène sulfures (PPS),
- les polyarylsulfones, en particulier les polyphénylène sulfones (PPSU),
- les polyoléfines, en particulier le polypropylène (PP);
- l'acide polylactique (PLA),
- l'alcool polyvinylique (PVA),
- les polymères fluorés, en particulier le poly(fluorure de vinylidène) (PVDF), ou le polytétrafluoroéthylène (PTFE) ou le polychlorotrifluoroéthylène (PCTFE),

et leurs mélanges.

Avantageusement, lorsque ledit polymère est un mélange de deux polymères P1 et P2, la proportion en poids de polymère P1 et P2 est comprise de 1-99% à 99-1%.

Avantageusement, lorsque ledit polymère thermoplastique est un mélange, et que le procédé de préimprégnation utilise une poudre sèche, ce mélange se présente sous forme d'une poudre obtenue soit par « dry blend » avant introduction dans la cuve de pré-imprégnation ou par « dry blend » réalisé directement dans la cuve ou encore, par broyage d'un compound réalisé au préalable en extrudeuse.

Avantageusement, ce mélange est composé d'une poudre obtenue par « dry blend », avant l'introduction dans la cuve ou directement dans la cuve, et ce mélange de deux polymères P1 et P2 est un mélange de PEKK et de PEI.

Avantageusement, le mélange PEKK/PEI est compris de 90-10% à 60-40% en poids, en particulier de 90-10% à 70-30% en poids.

Le polymère thermoplastique peut correspondre au polymère final non réactif qui imprégnera le matériau fibreux ou à un prépolymère réactif, qui imprégnera également le matériau fibreux, mais est susceptible de réagir sur lui-même ou avec un autre prépolymère, en fonction des fins de chaîne portées par ledit prépolymère, après pré-imprégnation, ou encore avec un allongeur de chaîne et notamment lors d'un chauffage au niveau des embarrages dans le four et/ou lors de la mise en œuvre de la tape dans le procédé final de fabrication de la pièce composite.

L'expression « polymère non réactif » signifie que le poids moléculaire n'est plus susceptible d'évoluer significativement, c'est-à-dire que sa masse moléculaire en nombre (Mn) évolue de moins de 50% lors de sa mise en œuvre et correspond donc au polymère polyamide final de la matrice thermoplastique.

A l'opposé, l'expression « polymère réactif » signifie que le poids moléculaire dudit polymère réactif va évoluer durant la mise en œuvre par réaction de prépolymères réactifs entre eux par condensation, substitution ou avec un allongeur de chaîne par polyaddition et sans élimination de sous-produits volatils pour conduire au polymère polyamide final (non réactif) de la matrice thermoplastique.

Selon une première possibilité, ledit prépolymère peut comprendre ou être constituée de, au moins un prépolymère (polyamide) réactif porteur sur la même chaîne (c'est-à-dire sur le même prépolymère), de deux fonctions terminales X' et Y' fonctions respectivement coréactives entre elles par condensation, plus particulièrement avec X' et Y' étant amine et carboxy ou carboxy et amine respectivement. Selon une deuxième possibilité, ledit prépolymère peut comprendre ou être constituée de, au moins deux prépolymères polyamides réactifs entre eux et porteurs chacun respectivement de deux fonctions terminales X' ou Y', identiques (identiques pour même prépolymère et différentes entre les deux prépolymères), ladite fonction X' d'un prépolymère pouvant réagir seulement avec ladite fonction Y' de l'autre prépolymère, en particulier par condensation, plus particulièrement avec X' et Y' étant amine et carboxy ou carboxy et amine respectivement.

Selon une troisième possibilité, ledit prépolymère peut comprendre ou être constituée de, au moins un prépolymère dudit polymère polyamide thermoplastique, porteur de n fonctions réactives terminales X, choisies parmi : -NH2, -CO2H et -OH, de préférence NH2 et -CO2H avec n étant 1 à 3, de préférence de 1 à 2, plus préférentiellement 1 ou 2, plus particulièrement 2 et au moins un allongeur de chaîne Y-A'-Y, avec A' étant un biradical hydrocarboné, porteur de 2 fonctions réactives terminales Y identiques, réactives par polyaddition avec au moins une fonction X dudit prépolymère a1), de préférence de masse moléculaire inférieure à 500, plus préférentiellement inférieure à 400.

La masse moléculaire moyenne en nombre Mn dudit polymère final de la matrice thermoplastique est de préférence dans une plage allant de 10000 à 40000, de préférence de 12000 à 30000. Ces valeurs Mn peuvent correspondre à des viscosités inhérentes supérieures ou égales à 0,8 telle que déterminées dans le m-crésol selon la norme ISO 307:2007 mais en changeant le solvant (utilisation du m-crésol à la place de l'acide sulfurique et la température étant de 20°C).

Lesdits prépolymères réactifs selon les deux options citées plus haut, ont une masse moléculaire moyenne en nombre Mn allant de 500 à 10000, de préférence de 1000 à 6800, en particulier de 2500 à 6800.

Les Mn sont déterminées en particulier par le calcul à partir du taux des fonctions terminales déterminé par titration potentiométrique en solution et la fonctionnalité desdits prépolymères. Les masses Mn peuvent également être déterminées par chromatographie d'exclusion stérique ou par RMN.

La nomenclature utilisée pour définir les polyamides est décrite dans la norme ISO 1874-1:2011 "Plastiques - Matériaux polyamides (PA) pour moulage et extrusion - Partie 1 : Désignation", notamment en page 3 (tableaux 1 et 2) et est bien connue de l'homme du métier.

Le polyamide peut être un homopolyamide ou un copolyamide ou un mélange de ceux-ci.

Avantageusement, les prépolymères de constitution de la matrice sont choisis parmi les Polyamides (PA), en particulier choisis parmi les polyamides aliphatiques, les polyamides cycloaliphatiques, et les polyamides semi-aromatiques (polyphthalamides) éventuellement modifiés par des motifs urées, et leur copolymères, le Polyméthacrylate de méthyle (PPMA) et ses copolymères, les Polyether imides (PEI), le Poly(sulfure de phénylène) (PPS), le Poly(sulfone de phénylène) (PPSU), le PVDF, le Poly(éthercétonecétone) (PEKK), le Poly(étheréthercétone) (PEEK), les polymères fluorés comme le poly(fluorure de vinylidène) (PVDF).

Pour les polymères fluorés, on peut utiliser un homopolymère du fluorure de vinylidène (VDF de formule $CH_2=CF_2$) ou un copolymère du VDF comprenant en poids au moins 50% en masse de VDF et au moins un autre monomère copolymérisable avec le VDF. La teneur en VDF doit être supérieure à 80% en masse, voire mieux 90% en masse, pour assurer une bonne résistance mécanique et chimique à la pièce de structure, surtout lorsqu'elle est soumise à des contraintes thermiques et chimiques. Le comonomère peut être un monomère fluoré tel que par exemple le fluorure de vinyle. Pour des pièces de structure devant résister à des températures élevées, outre les polymères fluorés, on utilise avantageusement selon l'invention les PAEK (PolyArylEtherKetone) tels que les poly(éther cétones) PEK, le poly(éther éther cétone) PEEK, le poly(éther cétone cétone) PEKK, le Poly(éther cétone éther cétone cétone) PEKEKK ou les PA de haute température de transition vitreuse Tg).

Avantageusement, ledit polymère thermoplastique est un polymère dont la température de transition vitreuse est telle que Tg ≥ 80°C, notamment ≥ 100°C, en particulier ≥ 120°C, notamment ≥ 140°C, ou un polymère semi-cristallin dont la température de fusion Tf $\geq$ 150°C.

Avantageusement, ledit polymère thermoplastique de la matrice est un polymère thermoplastique non réactif.

Avantageusement, ledit au moins un prépolymère thermoplastique est sélectionné parmi les polyamides, le PEKK, le PEI et un mélange PEKK et de PEI. Avantageusement, ledit polyamide est choisi parmi les polyamides aliphatiques, les polyamides cycloaliphatiques et les polyamides semi-aromatiques (polyphthalamides).

Avantageusement, ledit prépolymère polyamide aliphatique est choisi parmi :

- le polyamide 6 (PA6), le polyamide 11 (PA11), le polyamide 12 (PA12), le polyamide 66 (PA66), le polyamide 46 (PA46), le polyamide 610 (PA610), le polyamide 612 (PA612), le polyamide 1010 (PA1010), le polyamide 1012 (PA1012), le polyamide 11/1010 et le polyamide 12/1010, ou un mélange de ceux-ci ou un copolyamide de ceux-ci, et les copolymères blocs, notamment polyamide/polyéther (PEBA), et ledit polyamide semi-aromatique est un polyamide semi-aromatique, éventuellement modifié par des unités urées, notamment un PA MXD6 et un PA MXD10 ou un polyamide semi-aromatique de formule X/YAr, tel que décrits dans EP1505099, notamment un polyamide semi-aromatique de formule A/XT dans laquelle A est choisi parmi un motif obtenu à partir d'un aminoacide, un motif obtenu à partir d'un lactame et un motif répondant à la formule (diamine en Ca).(diacide en Cb), avec a représentant le nombre d'atomes de carbone de la diamine et b représentant le nombre d'atome de carbone du diacide, a et b étant chacun compris entre 4 et 36, avantageusement entre 9 et 18, le motif (diamine en Ca) étant choisi parmi les diamines aliphatiques, linéaires ou ramifiés, les diamines cycloaliphatiques et les diamines alkylaromatiques et le motif (diacide en Cb) étant choisi parmi les diacides aliphatiques, linéaires ou ramifiés, les diacides cycloaliphatiques et les diacides aromatiques;

X.T désigne un motif obtenu à partir de la polycondensation d'une diamine en Cx et de l'acide téréphtalique, avec x représentant le nombre d'atomes de carbone de la diamine en Cx, x étant compris entre 6 et 36, avantageusement entre 9 et 18, notamment un polyamide de formule A/6T, A/9T, A/10T ou A/11T, A étant tel que défini ci-dessus, en particulier un polyamide PA 6/6T, un PA 66/6T, un PA 6I/6T, un PA MPMDT/6T, un PA PA11/10T, un PA 11/6T/10T, un PA MXDT/10T, un PA MPMDT/10T, un PA BACT/10T, un PA BACT/6T, PA BACT/10T/6T, PA BACT/10T/11, PA BACT/6T/11.

T correspond à l'acide téréphtalique, MXD correspond à la m-xylylène diamine, MPMD correspond à la méthylpentaméthylène diamine et BAC correspond au bis(aminométhyl)cyclohexane.

Avantageusement, le polymère thermoplastique est un polyamide semi-aromatique. Avantageusement, le polymère thermoplastique est un polyamide semi-aromatique choisi parmi un PA MPMDT/6T, un PA PA11/10T, un PA 11/6T/10T, un PA MXDT/10T, un PA MPMDT/10T, un PA BACT/10T, un PA BACT/6T, PA BACT/10T/6T, PA BACT/10T/11, PA BACT/6T/11.

**S'agissant de l'étape de** pré-imprégnation :

L'étape de pré-imprégnation comme déjà indiquée ci-dessus peut être effectuée selon les techniques bien connues de l'homme du métier et notamment choisies parmi celles décrites ci-dessus.

Dans un mode de réalisation avantageux, l'étape de pré-imprégnation est effectuée avec un système choisi parmi un lit fluidisé, une pulvérisation par pistolet et la voie fondue, notamment à grande vitesse, en particulier l'imprégnation est effectuée en lit fluidisé.

Avantageusement, la pré-imprégnation est effectuée avec un système choisi parmi un lit fluidisé, une pulvérisation par pistolet et la voie fondue, notamment à grande vitesse, en particulier l'imprégnation est effectuée en lit fluidisé et une ou plusieurs pièce(s) d'embarrage(s) (E") est(sont) présente(s) en amont dudit système.

Il faut noter que les pièces d'embarrage (E) et (E") peuvent être identiques ou différentes que ce soit au niveau du matériau ou de la forme et ses caractéristiques (diamètre, longueur, largeur, hauteur ... en fonction de la forme).

Elles peuvent au même niveau ou à des niveaux différents. Ce dernier cas est représenté par exemple par la figure 7.

Le procédé de pré-imprégnation par lit fluidisé est décrit dans WO 2018/115736.

Avantageusement, l'étape de pré-imprégnation est effectuée en lit fluidisé.

Un exemple d'unité de mise en œuvre d'un procédé de fabrication sans l'étape de chauffage au moyen d'au moins une pièce d'embarrage est décrit dans la demande internationale WO 2015/121583.

Ce système décrit l'utilisation d'une cuve comprenant un lit fluidisé pour effectuer l'étape de pré-imprégnation et peut être utilisé dans le cadre de l'invention.

Avantageusement, la cuve comprenant le lit fluidisé est munie d'au moins une pièce d'embarrage (E') qui peut être un rouleau de compression).

Il faut noter que les pièces d'embarrage (E) et (E') peuvent être identiques ou différentes que ce soit au niveau du matériau ou de la forme et ses caractéristiques (diamètre, longueur, largeur, hauteur ... en fonction de la forme).

Cependant, la pièce d'embarrage (E') n'est ni chauffante ni chauffée.

L'étape de pré-imprégnation du matériau fibreux est réalisée par passage d'une ou plusieurs mèches dans un dispositif de pré-imprégnation en continu, comprenant une cuve (10) muni d'au moins une pièce d'embarrage (E') et comprenant un lit fluidisé (12) de poudre de ladite matrice polymère.

La poudre de ladite matrice polymère ou polymère est mise en suspension dans un gaz G (de l'air par exemple) introduit dans la cuve et circulant dans la cuve (10) à travers une trémie (11). La ou les mèches sont mises en circulation dans ce lit fluidisé (12).

La cuve peut avoir toute forme, notamment cylindrique ou parallélépipédique, en particulier un parallélépipède rectangle ou un cube, avantageusement un parallélépipède rectangle.

La cuve (10) peut être une cuve ouverte ou fermée. Avantageusement, elle est ouverte.

Dans le cas où la cuve est fermée, elle est alors équipée d'un système d'étanchéité pour que la poudre de ladite matrice polymère ne puisse pas sortir de ladite cuve.

Cette étape de pré-imprégnation est donc effectuée par voie sèche, c'est à dire que la matrice polymère thermoplastique est sous forme de poudre, notamment en suspension dans un gaz, en particulier de l'air, mais ne peut pas être en dispersion dans un solvant ou dans l'eau.

Chaque mèche à pré-imprégner après passage sur les embarrages (E) pénètre dans le lit fluidisé.

La mèche de fibres ou les mèches de fibres parallèles passent alors dans une cuve (10), comprenant en particulier un lit fluidisé (12), munie d'au moins une pièce d'embarrage (E') qui est un rouleau de compression ou est déjà présente dans la cuve et pénètre alors dans le lit fluidisé (12), munie d'au moins une pièce d'embarrage (E') La mèche de fibres ou les mèches de fibres parallèles ressort(ent) ensuite de la cuve après pré-imprégnation après contrôle éventuel du temps de séjour dans la poudre. Le procédé de pré-imprégnation par pulvérisation par pistolet est décrit dans WO 2018/115739.

Le procédé de pré-imprégnation par voie fondue est décrit dans WO 2018/234439.

Avantageusement l'étape de pré-imprégnation est effectuée par voie fondue, notamment par pultrusion.

Les techniques de pré-imprégnation par voie fondue sont bien connues de l'homme du métier et sont décrites dans les références ci-dessus.

L'étape de pré-imprégnation est effectué notamment par extrusion en tête d'équerre de la matrice polymère et passage de ladite mèche ou desdites mèches dans cette tête d'équerre puis passage dans une filière chauffée, la tête d'équerre étant éventuellement munie d'embarrages fixes ou rotatifs sur lesquels la mèche défile provoquant ainsi un épanouissement de ladite mèche permettant une pré-imprégnation de ladite mèche.

La pré-imprégnation peut aussi être effectuée telle que décrite dans US 2014/0005331 A1 à la différence que l'alimentation en résine est effectuée des deux côtés de ladite mèche et qu'il n'existe pas de surface de contact éliminant une partie de la résine sur l'une des deux surfaces.

Avantageusement, l'étape de pré-imprégnation est effectuée par voie fondue à grande vitesse, c'est-à-dire avec une vitesse de défilement de ladite mèche ou desdites mèches supérieure ou égale à 5 m/min, en particulier supérieure à 9 m/min.

Dans un mode de réalisation, le procédé selon l'invention comprend une étape de chauffage du matériau fibreux pré-imprégné pour fondre le polymère thermoplastique de la matrice et finaliser l'imprégnation dudit matériau fibreux.

Dans un autre mode de réalisation, le procédé selon l'invention comprend une étape de chauffage du matériau fibreux pré-imprégné pour fondre et polymériser le prépolymère thermoplastique de la matrice éventuellement avec ledit allongeur et finaliser l'imprégnation dudit matériau fibreux.

Ladite étape de chauffage peut être effectuée telle que décrite dans WO 2018/234439:
Une première étape de chauffage peut être immédiatement consécutive à l'étape de pré-imprégnation ou alors d'autres étapes peuvent intervenir entre l'étape de pré-imprégnation et l'étape de chauffage et ce quelle que soit le système choisi pour effectuer l'étape de pré-imprégnation, et notamment avec un système choisi parmi un lit fluidisé, une pulvérisation par pistolet et la voie fondue, notamment à grande vitesse, en particulier un lit fluidisé.

Avantageusement, ladite première étape de chauffage est immédiatement consécutive à l'étape de pré-imprégnation. L'expression « immédiatement consécutive » signifie qu'il n'y a pas d'étape intermédiaire entre l'étape de pré-imprégnation et ladite étape de chauffage.

Avantageusement, une seule étape de chauffage est effectuée, immédiatement consécutive à l'étape de pré-imprégnation.

Avantageusement, ledit au moins un système de chauffage est choisi parmi une lampe infrarouge, une lampe UV et un chauffage par convection.

Le matériau fibreux étant en contact avec le ou les embarrage(s) dans le système de chauffage, et l'embarrage étant conducteur, le système de chauffage s'effectue donc également par conduction.

Avantageusement, ledit au moins un système de chauffage est choisi parmi une lampe infrarouge.

Avantageusement, ladite au moins une pièce d'embarrage (E") est un rouleau de compression de forme convexe, concave ou cylindrique.

Il faut noter que les rouleaux de compression correspondant aux pièces d'embarrage (E), (E') et (E") peuvent être identiques ou différentes que ce soit au niveau du matériau ou de la forme et ses caractéristiques (diamètre, longueur, largeur, hauteur ... en fonction de la forme).

La forme convexe est favorable à l'épanouissement alors que la forme concave est défavorable à l'épanouissement bien qu'il s'effectue néanmoins.

La au moins une pièce d'embarrage (E") peut également être une alternance de forme convexe et concave. Dans cas, le défilement de la mèche sur un rouleau de compression de forme convexe provoque l'épanouissement de ladite mèche puis le défilement de la mèche sur un rouleau de compression de forme concave provoque la rétractation de la mèche et ainsi de suite permettant si besoin d'améliorer l'homogénéité de l'imprégnation, notamment à cœur.

L'expression « rouleau de compression » signifie que la mèche qui défile s'appuie partiellement ou totalement sur la surface dudit rouleau de compression, ce qui induit l'épanouissement de ladite mèche.

Les rouleaux peuvent être libres (en rotation) ou fixes.

Ils peuvent être lisses, striés ou gorgés.

Avantageusement, les rouleaux sont cylindriques et striés. Lorsque les rouleaux sont striés, deux stries peuvent être présentes en sens opposée l'une de l'autre en partant du centre dudit rouleau permettant ainsi l'éloignement des mèches vers l'extérieure du rouleau ou en sens opposée l'une de l'autre en partant de l'extérieur dudit rouleau permettant ainsi de ramener les mèches vers le centre du rouleau.

Cette étape de chauffage permet d'homogénéiser la pré-imprégnation, de finaliser ainsi l'imprégnation et d'avoir ainsi une imprégnation à cœur et d'avoir un taux élevé de fibres en volume, notamment constant dans au moins 70% du volume de la bande ou ruban, notamment dans au moins 80% du volume de la bande ou ruban, en particulier dans au moins 90% du volume de la bande ou ruban, plus particulièrement dans au moins 95% du volume de la bande ou ruban, ainsi que de diminuer la porosité.

L'épanouissement est fonction du matériau fibreux utilisé. Par exemple, l'épanouissement d'un matériau en fibre de carbone est beaucoup plus important que celui d'une fibre de lin.

L'épanouissement est aussi fonction du nombre de fibres dans la mèche, de leur diamètre moyen et de leur cohésion de par l'ensimage.

Le diamètre dudit au moins un rouleau de compression (embarrage (E")) est compris de 3 mm à 100 mm, préférentiellement de 3 mm à 20 mm, en particulier de 5 mm à 10 mm.

Au-dessous de 3 mm, la déformation de la fibre induite par le rouleau de compression est trop importante.

Avantageusement, le rouleau de compression est cylindrique et non cannelé et en particulier est métallique.

Avantageusement, ladite au moins une pièce d'embarrage (E") est constituée d'au moins un 1 rouleau de compression de forme cylindrique.

Avantageusement, ladite au moins une pièce d'embarrage (E") est constituée de 1 à 15 rouleaux de compression (R1 à R15) de forme cylindrique, préférentiellement de 3 à 15 rouleaux de compression (R3 à R15), notamment de 6 à 10 rouleaux de compression (R6 à R10).

Il est bien évident que quel que soit le nombre de pièces d'embarrages (E") présentes, elles sont toutes situées ou comprises dans l'environnement du système de chauffage, c'est-à-dire qu'elle ne sont pas à l'extérieur du système de chauffage.

Selon un autre aspect, la présente invention concerne l'utilisation du procédé tel que défini ci-dessus, pour la fabrication de rubans calibrés adaptés à la fabrication de pièces composites en trois dimensions, par dépose automatique desdits rubans au moyen d'un robot.

Dans un mode de réalisation, lesdites pièces composites concernent les domaines des transports, en particulier automobile, du pétrole et du gaz, en particulier l'offshore, de l'hydrogène, du stockage de gaz, notamment de l'hydrogène, aéronautique, nautique, ferroviaire ; des énergies renouvelables, en particulier éolienne, hydrolienne, les dispositifs de stockage d'énergie, les panneaux solaires ; des panneaux de protection thermique ; des sports et loisirs, de la santé et du médical et de l'électronique.

Brève description des figures

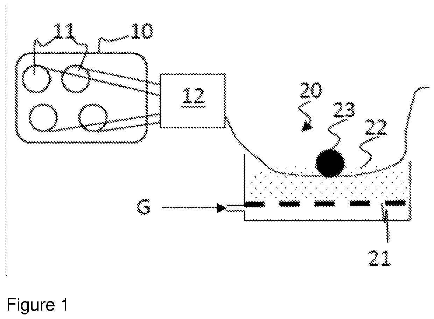

[Fig. 1] présente un schéma partiel d'une unité de mise en œuvre du procédé de fabrication d'un matériau fibreux pré-imprégné selon WO 2018/115736.

Chaque mèche à imprégner est déroulée d'un dispositif 10 à dévidoirs 11 sous la traction engendrée par des cylindres (non représentés). Le dispositif 10 comprend une pluralité de dévidoirs 11, chaque dévidoir permettant de dérouler une mèche à imprégner. Ainsi, il est possible d'imprégner plusieurs mèches de fibres simultanément. Chaque dévidoir 11 est pourvu d'un frein (non représenté) de manière à appliquer une tension sur chaque mèche de fibres. Dans ce cas, un module d'alignement 12 permet de disposer les mèches de fibres parallèlement les unes par rapport aux autres. De cette manière les mèches de fibres ne peuvent pas être en contact les unes avec les autres, ce qui permet d'éviter une dégradation mécanique des fibres notamment.

La mèche de fibres ou les mèches de fibres parallèles passent alors dans une cuve 20 de lit fluidisé 22 muni d'au moins un embarrage (E') (23), en particulier un rouleau de compression. La poudre de polymère(s) est mise en suspension dans un gaz G (de l'air par exemple) introduit dans la cuve et circulant dans la cuve à travers une trémie 21. La ou les mèches sont mises en circulation dans ce lit fluidisé 22.

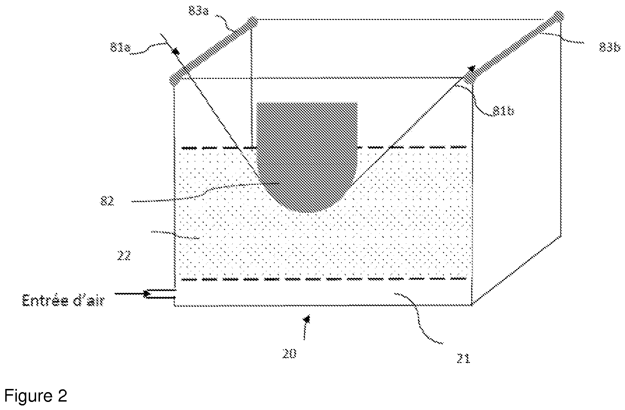

[Fig. 2] présente une cuve comprenant un lit fluidisé munie d'au moins une pièce d'embarrage (E') qui peut être un rouleau de compression

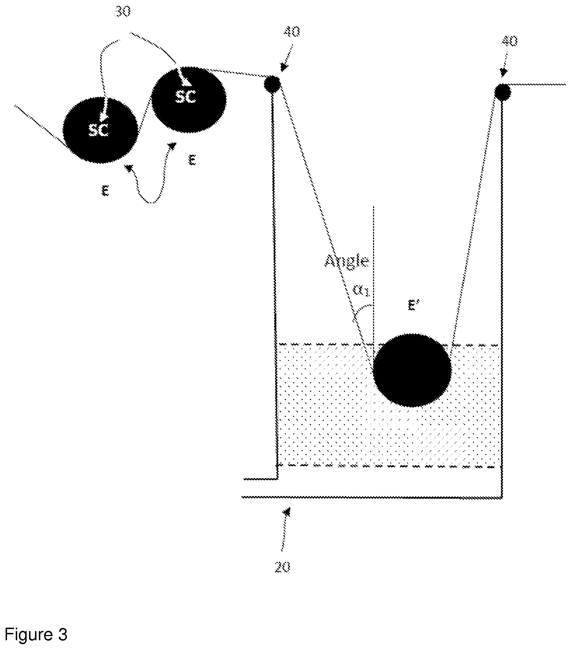

[Fig. 3] présente une cuve de lit fluidisé comprenant un embarrage (E') sur laquelle le matériau fibreux épanoui et chauffé circule pour effectuer la pré-imprégnation, l'étape d'épanouissement étant effectué à l'extérieur du système d'imprégnation et le système de chauffage SC (30) est intégré aux rouleaux de compression (E).

Le matériau fibreux pénètre à l'intérieur de la cuve et en ressort en passant sur le bord de la cuve (40) qui peut être un rouleau fixe ou mobile.

La figure présente deux rouleaux mais l'invention n'est pas limitée à cette configuration.

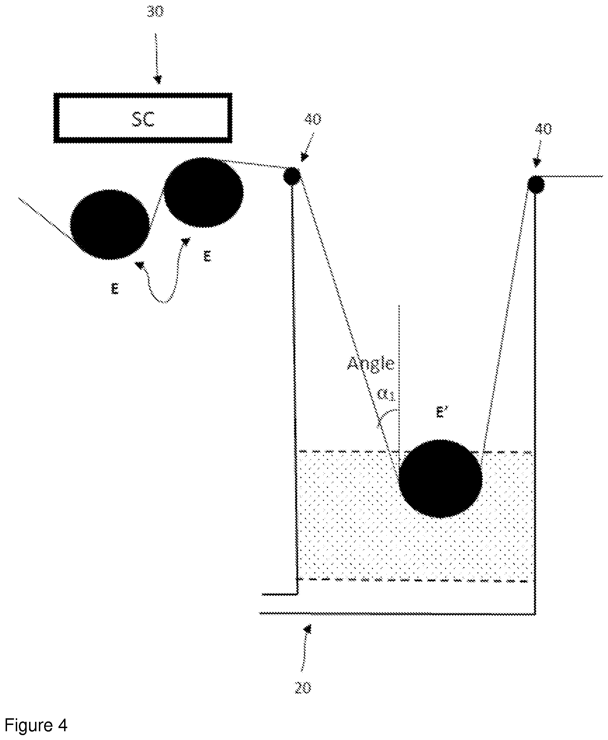

[Fig. 4] présente une cuve de lit fluidisé comprenant un embarrage (E') sur laquelle le matériau fibreux épanoui et chauffé circule pour effectuer la pré-imprégnation, l'étape d'épanouissement étant effectué à l'extérieur du système d'imprégnation et le système de chauffage SC (30) qui peut être un système à infra-rouge est situé au-dessus des rouleaux de compression (E).

Le matériau fibreux pénètre à l'intérieur de la cuve et en ressort en passant sur le bord de la cuve (40) qui peut être un rouleau fixe ou mobile.

La figure présente deux rouleaux mais l'invention n'est pas limitée à cette configuration.

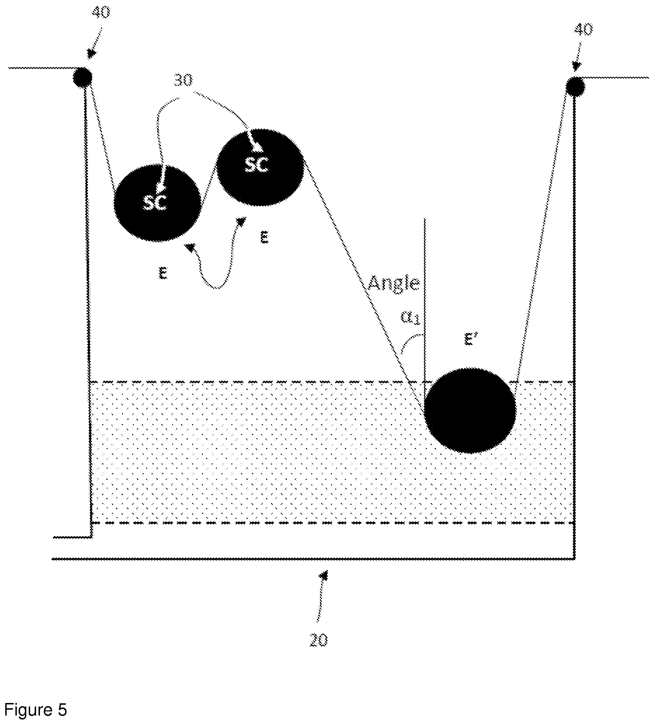

[Fig. 5] présente une cuve de lit fluidisé comprenant un embarrage (E') sur laquelle le matériau fibreux épanoui et chauffé circule pour effectuer la pré-imprégnation, l'étape d'épanouissement étant effectué à l'intérieur du système d'imprégnation et le système de chauffage SC (30) est intégré aux rouleaux de compression (E) qui sont situés au-dessus du lit fluidisé.

Le matériau fibreux pénètre à l'intérieur de la cuve et en ressort en passant sur le bord de la cuve (40) qui peut être un rouleau fixe ou mobile.

La figure présente deux rouleaux mais l'invention n'est pas limitée à cette configuration.

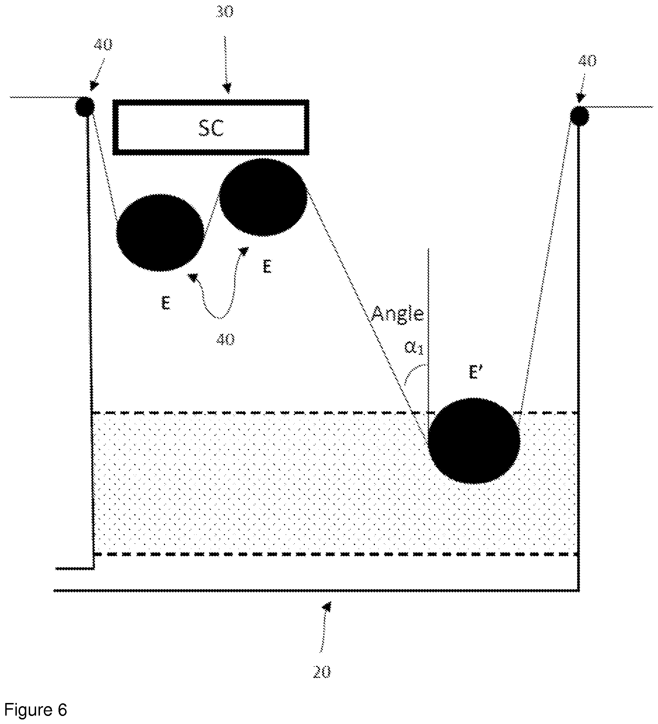

[Fig. 6] présente une cuve de lit fluidisé comprenant un embarrage (E') sur laquelle le matériau fibreux épanoui et chauffé circule pour effectuer la pré-imprégnation, l'étape d'épanouissement étant effectué à l'intérieur du système d'imprégnation et le système de chauffage SC (30) qui peut être un système à infra-rouge situé au-dessus des rouleaux de compression (E) qui sont situés au-dessus du lit fluidisé.

Le matériau fibreux pénètre à l'intérieur de la cuve et en ressort en passant sur le bord de la cuve (40) qui peut être un rouleau fixe ou mobile.

La figure présente deux rouleaux mais l'invention n'est pas limitée à cette configuration.

[Fig. 7] présente un système de six rouleaux de compression (E) sur deux niveaux.

Exemples

Exemple 1 comparatif : Etape d'épanouissement au moyen de six embarrages (E) sans système de chauffage et situés à l'extérieur du système de pré-imprégnation

Le mode opératoire suivant a été effectué:

Un système de 6 rouleaux cylindriques lisses répartis comme présentés en figure 7 en deux rangés de rouleaux, trois étant de diamètre 25 mm sur une rangée et trois autres rouleaux sur une autre rangée étant de diamètre 20 mm.

Les rouleaux ont un revêtement Topocrom®.

Le système de rouleaux est situé en dehors de la cuve.

La distance L entre les deux jeux de rouleaux supérieurs et inférieurs est égale à 17 mm ; la distance L'entre deux rouleaux adjacents est égale à 15,2mm et i = 300$\mu$m (calculé par l'équation indiquée en figure 7) induisant ainsi un interstice entre les rouleaux de 300$\mu$m pour le passage de la mèche.

Mèches utilisées : SIGRAFIL® T24-5.0/270-T140 de la société SGL Technologies GmbH, avec un ensimage thermoplastique.

Tension de la mèche à la sortie du cantre et avant de rencontrer le système d'épanouissement : 500g
D50 = 108 $\mu$m, (D10 = 39$\mu$m, D90 = 194$\mu$m) pour la poudre de BACT/10T.

Bord de la cuve équipé d'un rouleau fixe de diamètre 20mm.

Le premier rouleau immergé dans la cuve de fluidisation est situé à 24cm du rouleau fixe en entrée de cuve.

On mesure la largeur de la mèche avant et après le système d'épanouissement à l'aide d'un système de mesure LED Keyence. Un système équivalent est placé pour mesure la largeur de la mèche en entrée de bain de fluidisation.

On obtient les données suivantes :

[Tableaux 1]

| Matériau | Largeur de la mèche (mm) | | |
|---|---|---|---|
| | Entrée du système de six embarrages | Sortie du système de six embarrages | Entrée de cuve de fluidisation |
| SIGRAFIL® T24-5.0/270-T140 , SGL Technologies GmbH, avec un ensimage thermoplastique | 9-12mm | 15-18mm | 15-19mm |

Exemple 2 comparatif : Etape d'épanouissement au moyen d'un système de chauffage par infra-rouge situé à l'extérieur du système de pré-imprégnation et sans présence d'embarrages (E)

Le mode opératoire suivant a été effectué :

Un système de chauffage infrarouge court linéaire (mono-radiant de puissance 3kW maximum avec variateur de puissance) placé horizontalement à l'extérieur de la cuve.
La mèche de fibres passe sous le module à une distance de 5cm de l'émetteur.
Mèches utilisées : SIGRAFIL® T24-5.0/270-T140 de la société SGL Technologies GmbH, avec un ensimage thermoplastique.

Tension de la mèche à la sortie du cantre et avant de passer sous le module infrarouge : 500g
D50 = 108 $\mu$m, (D10 = 39$\mu$m, D90 = 194$\mu$m) pour la poudre de BACT/10T.

Bord de la cuve équipé d'un rouleau fixe de diamètre 20mm.
Le premier rouleau immergé dans la cuve de fluidisation est situé à 24cm du rouleau fixe en entrée de cuve.
On mesure la largeur de la mèche avant et après le système de chauffage IR à l'aide d'un système de mesure LED Keyence. Un système équivalent est placé pour mesure la largeur de la mèche en entrée de bain de fluidisation.
On obtient les données suivantes :

[Tableaux 2]

| Matériau | Largeur de la mèche (mm) | | |
|---|---|---|---|
| | Entrée du système sans embarrages | Sortie du système sans embarrages | Entrée de cuve de fluidisation |
| SIGRAFIL® T24-5.0/270-T140 , SGL Technologies GmbH, avec un ensimage thermoplastique | 9-12mm | 10-12mm | 10-13mm |

Exemple 3 invention : Etape d'épanouissement au moyen de six embarrages (E) avec un système de chauffage IR à l'extérieur du système de pré-imprégnation

Le mode opératoire suivant a été effectué:

Un système de 6 rouleaux cylindriques lisses répartis comme présentés en figure 7 en deux rangés de rouleaux, trois étant de diamètre 25 mm sur une rangée et trois autres rouleaux sur une autre rangée étant de diamètre 20 mm.
Les rouleaux ont un revêtement Topocrom®.
Un système de chauffage infrarouge court linéaire (mono-radiant de puissance 3kW maximum avec variateur de puissance) mis horizontalement est placé au-dessus du système d'embarrages à l'extérieur du système de pré-imprégnation.
La mèche de fibres passe dans le système d'embarrages et ainsi sous le module à une distance de 5cm de l'émetteur IR.
La distance L entre les deux jeux de rouleaux supérieurs et inférieurs est égale à 17 mm ; la distance L' entre deux rouleaux adjacents est égale à 15,2mm et i = 300$\mu$m (calculé par l'équation indiquée en figure 7) induisant ainsi un interstice entre les rouleaux de 300$\mu$m pour le passage de la mèche.
Bord de la cuve équipé d'un rouleau fixe de diamètre 20mm.
Tension de la mèche après contact avec le rouleau d'entrée de cuve de diamètre 20mm et avant de rencontrer le système d'épanouissement situé dans la cuve : 500g

On mesure la largeur de la mèche avant et après le système d'épanouissement à l'aide d'un système de mesure LED Keyence. Un système équivalent est placé pour mesure la largeur de la mèche en entrée de bain de fluidisation.

Mèches utilisées : SIGRAFIL® T24-5.0/270-T140 de la société SGL Technologies GmbH, avec un ensimage thermoplastique.

D50 = 108 $\mu$m, (D10 = 39$\mu$m, D90 = 194$\mu$m) pour la poudre de BACT/10T.

On obtient les données suivantes :

[Tableaux 3]

| Matériau | Largeur de la mèche (mm) | | |
|---|---|---|---|
| | Entrée du système de six | Sortie du système de six embarrages avec chauffage | Entrée dans le lit fluidisé |
| | embarrages avec chauffage | | |
| SIGRAFIL® T24-5.0/270-T140 , SGL Technologies GmbH, avec un ensimage thermoplastique | 9-12mm | 26-30mm | 27-30mm |

Exemple 4 invention : Etape d'épanouissement au moyen de six embarrages (E) avec un système de chauffage IR à l'intérieur du système d'imprégnation au-dessus du lit fluidisé

Le mode opératoire suivant a été effectué:

Un système de 6 rouleaux cylindriques lisses répartis comme présentés en figure 7 en deux rangées de rouleaux, trois étant de diamètre 25 mm sur une rangée et trois autres rouleaux sur une autre rangée étant de diamètre 20 mm.

Les rouleaux ont un revêtement Topocrom®.

Un système de chauffage infrarouge court linéaire (mono-radiant de puissance 3kW maximum avec variateur de puissance) mis horizontalement est placé au-dessus du système d'embarrages.

La mèche de fibres passe dans le système d'embarrages et ainsi sous le module à une distance de 5cm de l'émetteur IR.

Le système de rouleaux d'embarrages et de chauffage associé est situé dans la cuve.

La distance L entre les deux jeux de rouleaux supérieurs et inférieurs est égale à 17 mm ; la distance L'entre deux rouleaux adjacents est égale à 15,2mm et i = 300$\mu$m (calculé par l'équation indiquée en [Math 2]) induisant ainsi un interstice entre les rouleaux de 300$\mu$m pour le passage de la mèche.

Bord de la cuve équipé d'un rouleau fixe de diamètre 20mm.

Tension de la mèche après contact avec le rouleau d'entrée de cuve de diamètre 20mm et avant de rencontrer le système d'épanouissement situé dans la cuve : 500g

Le premier rouleau immergé dans la cuve de fluidisation est situé à 16cm du dernier rouleau du système d'épanouissement.

On mesure la largeur de la mèche avant et après le système d'épanouissement à l'aide d'un système de mesure LED Keyence. Un système équivalent est placé pour mesure la largeur de la mèche en entrée de bain de fluidisation.

Mèches utilisées : SIGRAFIL® T24-5.0/270-T140 de la société SGL Technologies GmbH, avec un ensimage thermoplastique.

D50 = 108 $\mu$m, (D10 = 39$\mu$m, D90 = 194$\mu$m) pour la poudre de BACT/10T.

On obtient les données suivantes :

[Tableaux 4]

| Matériau | Largeur de la mèche (mm) | | |
|---|---|---|---|
| | Entrée du système de six embarrages avec chauffage | Sortie du système de six embarrages avec chauffage | Entrée dans le lit fluidisé |
| SIGRAFIL® T24-5.0/270-T140 , SGL Technologies GmbH, avec un ensimage thermoplastique | 9-12mm | 26-30mm | 27-30mm |

**Revendications**

1. Procédé de fabrication d'un matériau fibreux imprégné comprenant un matériau fibreux en fibres continues et au moins une matrice polymère thermoplastique, procédé dans lequel ledit matériau fibreux est ensimé par un polymère thermoplastique d'ensimage et présente, avant sa pré-imprégnation par ledit polymère thermoplastique, une largeur initiale l, ledit procédé comprenant une étape d'épanouissement dudit matériau fibreux avant une étape de pré-imprégnation, ladite étape d'épanouissement étant effectuée au moyen d'au moins deux pièces d'embarrage (E) et d'au moins un système de chauffage SC permettant le chauffage desdites pièces d'embarrages et/ou dudit matériau fibreux, ledit épanouissement après défilement dudit matériau fibreux au contact desdites pièces d'embarrage étant compris de 1,5 à 5 fois la largeur initiale l, l'épanouissement étant constant et représentant toujours 1,5 à 5 fois la largeur initiale l lors de la mise en contact dudit matériau fibreux avec ladite matrice polymère thermoplastique dans le système de pré-imprégnation, le procédé étant **caractérisé en ce que** ledit matériau épanoui est refroidi en dessous de la Tg du polymère thermoplastique d'ensimage au moyen d'un système de refroidissement avant sa mise en contact avec ladite matrice polymère thermoplastique dans le système de pré-imprégnation pour effectuer l'étape de pré-imprégnation.

2. Procédé selon la revendication 1, **caractérisé en ce que** le système de chauffage SC et les au moins deux pièces d'embarrage (E) sont situés à l'extérieur ou à l'intérieur du système de pré-imprégnation.

3. Procédé selon la revendication 1 ou 2, **caractérisé en ce que** le système de chauffage SC et les au moins deux pièces d'embarrage (E) sont situés à l'extérieur du système de pré-imprégnation et ladite étape de pré-imprégnation est effectuée avec un système choisi parmi un lit fluidisé, une pulvérisation par pistolet, la dispersion aqueuse et la voie fondue, notamment à grande vitesse, en particulier la pré-imprégnation est effectuée en lit fluidisé.

4. Procédé selon la revendication 1 ou 2, **caractérisé en ce que** le système de chauffage SC et les au moins deux pièces d'embarrage (E) sont situés à l'intérieur du système de pré-imprégnation et ladite étape de pré-imprégnation est effectuée avec un système choisi parmi un lit fluidisé, une pulvérisation par pistolet, la dispersion aqueuse, en particulier la pré-imprégnation est effectuée en lit fluidisé.

5. Procédé selon l'une des revendications 1 à 4, **caractérisé en ce que** lesdites au moins deux pièces d'embarrage (E) sont conductrices de la chaleur et un moyen de chauffage SC est présent et intégré audites au moins deux pièces d'embarrage (E).

6. Procédé selon l'une des revendications 1 à 4, **caractérisé en ce que** lesdites au moins deux pièces d'embarrage (E) sont conductrices de la chaleur et un moyen de chauffage SC est présent au-dessus desdites au moins deux pièces d'embarrage (E) permettant de chauffer le matériau fibreux et lesdites au moins deux pièces d'embarrage (E).

7. Procédé selon la revendication 5 ou 6, **caractérisé en ce que** lesdites au moins deux pièces d'embarrage (E) sont conductrices de la chaleur et un moyen de chauffage SC1 est présent et intégré audites au moins deux pièces d'embarrage (E) et un moyen de chauffage SC2 est présent au-dessus desdites au moins deux pièces d'embarrage (E) permettant de chauffer le matériau fibreux et lesdites au moins deux pièces d'embarrage (E).

8. Procédé selon l'une des revendications 1 à 4, **caractérisé en ce que** lesdites au moins deux pièces d'embarrage (E) sont non conductrices de la chaleur et un moyen de chauffage SC2 est présent au-dessus desdites au moins deux pièces d'embarrage (E) permettant de chauffer le matériau fibreux.

9. Procédé selon l'une des revendications 1 à 8, **caractérisé en ce que** les au moins deux pièces d'embarrage (E) sont des rouleaux de compression de forme convexe, concave ou cylindrique, de préférence cylindrique.

10. Procédé selon la revendication 9, **caractérisé en ce que** le nombre de rouleaux en contact avec ledit matériau fibreux est compris de 2 à 20, en particulier de 2 à 12, en particulier de 2 à 9, préférentiellement de 6 à 9.

11. Procédé selon l'une des revendications 9 à 10 **caractérisé en ce que** lesdits rouleaux de compression ont un traitement de surface et/ou une rugosité apparente de surface minimisant les frottements avec les fibres de renfort.

12. Procédé selon l'une des revendications 9 à 11, **caractérisé en ce que** lesdits rouleaux sont distants l'un de l'autre d'une distance inférieure à 30 cm, en particulier comprise de D/2 + 1 mm à 30 cm, D étant le diamètre du rouleau.

13. Procédé selon l'une des revendications 9 à 12, **caractérisé en ce que** la distance entre le dernier rouleau et un point de contact entre la fibre de renfort et un élément du procédé suivant est inférieure à 30 cm.

14. Procédé selon l'une des revendications 1 à 12, **caractérisé en ce que** ledit polymère thermoplastique est un polymère thermoplastique non réactif.

15. Procédé selon l'une des revendications 1 à 14, **caractérisé en ce que** ledit au moins polymère thermoplastique de la matrice est sélectionné parmi : les poly(aryl éthercétones) (PAEK), en particulier le poly(étheréthercétone) (PEEK) ; les poly(aryl éthercétonecétone) (PAEKK), en particulier le poly(éthercétonecétone) (PEKK) ; les polyéther-imides (PEI) aromatiques ; les polyaryl sulfones, en particulier les polyphénylène sulfones (PPSU) ; les polyarylsulfures, en particulier les polyphénylène sulfures (PPS) ; les polyamides (PA), en particulier polyamides semi-aromatiques (polyphthalamides) éventuellement modifiées par unités urées ; les PEBA, les polyacrylates en particulier le polyméthacrylate de méthyle (PMMA) ; les polyoléfines, en particulier le polypropylène, l'acide polylactique (PLA), l'alcool polyvinylique (PVA), et les polymères fluorés en particulier le polyfluorure de vinylidène (PVDF) ou le polytetrafluoroéthylène (PTFE) ou le polychlorotrifluoroéthylène (PCTFE); et leurs mélanges, notamment un mélange de PEKK et de PEI, de préférence de 90-10% en poids à 60-40% en poids, en particulier de 90-10% en poids à 70-30% en poids.

16. Utilisation du procédé tel que défini selon l'une des revendications 1 à 15, pour la fabrication de rubans calibrés adaptés à la fabrication de pièces composites en trois dimensions, par dépose automatique desdits rubans au moyen d'un robot.

17. Utilisation selon la revendication 16, **caractérisée en ce que** lesdites pièces composites concerne les domaines des transports, en particulier automobile, du pétrole et du gaz, en particulier l'offshore, de l'hydrogène, du stockage de gaz, notamment de l'hydrogène, aéronautique, nautique, ferroviaire ; des énergies renouvelables, en particulier éolienne, hydrolienne, les dispositifs de stockage d'énergie, les panneaux solaires ; des panneaux de protection thermique ; des sports et loisirs, de la santé et du médical et de l'électronique.

## Patentansprüche

1. Verfahren zur Herstellung eines imprägnierten Fasermaterials, das ein Fasermaterial aus Endlosfasern und mindestens eine thermoplastische Polymermatrix umfasst, wobei in dem Verfahren das Fasermaterial mit einem thermoplastischen Schlichtpolymer geschlichtet wird und es vor seiner Vorimprägnierung mit dem thermoplastischen Polymer eine Anfangsbreite I aufweist, wobei das Verfahren einen Schritt zum Ausbreiten des Fasermaterials vor einem Schritt zum Vorimprägnieren umfasst, wobei der Schritt zum Ausbreiten mit mindestens zwei Spannteilen (E) und mindestens einem Heizsystem SC durchgeführt wird, mit dem sich die Spannteile und/oder das Fasermaterial erwärmen lassen bzw. lässt, wobei das Ausbreiten, nachdem das Fasermaterial mit den Spannteilen in Kontakt gelangt ist, vom 1,5- bis 5-Fachen der Anfangsbreite 1 beträgt, wobei das Ausbreiten gleichbleibend ist und stets das 1,5- bis 5-Fache der Anfangsbreite 1 beträgt, wenn das Fasermaterial im Vorimprägnierungssystem mit der thermoplastischen Polymermatrix in Kontakt gebracht wird, wobei das Verfahren **dadurch gekennzeichnet ist, dass** das ausgebreitete Material mit einem Abkühlsystem unter die Tg des thermoplastischen Schlichtpolymers abgekühlt wird, bevor es im Vorimprägnierungssystem mit der thermoplastischen Polymermatrix in Kontakt gebracht wird, damit der Schritt zur Vorimprägnierung durchgeführt wird.

2. Verfahren nach Anspruch 1, **dadurch gekennzeichnet, dass** sich das Heizsystem SC und die mindestens zwei Spannteile (E) außerhalb oder innerhalb des Vorimprägnierungssystems befinden.

3. Verfahren nach Anspruch 1 oder 2, **dadurch gekennzeichnet, dass** sich das Heizsystem SC und die mindestens zwei Spannteile (E) außerhalb des Vorimprägnierungssystems befinden und der Schritt zur Vorimprägnierung mit einem System durchgeführt wird, das aus Fließbett, Zerstäubung mit einer Sprühpistole, wässriger Dispersion und Schmelzen, insbesondere bei hoher Geschwindigkeit, ausgewählt wird, wobei die Vorimprägnierung vor allem im Fließbett durchgeführt wird.

4. Verfahren nach Anspruch 1 oder 2, **dadurch gekennzeichnet, dass** sich das Heizsystem SC und die mindestens zwei Spannteile (E) innerhalb des Vorimprägnierungssystems befinden und der Schritt zur Vorimprägnierung mit einem System durchgeführt wird, das aus Fließbett, Zerstäubung mit einer Sprühpistole, wässriger Dispersion ausgewählt wird, wobei die Vorimprägnierung vor allem im Fließbett durchgeführt wird.

5. Verfahren nach einem der Ansprüche 1 bis 4, **dadurch gekennzeichnet, dass** die mindestens zwei Spannteile (E) wärmeleitend sind und ein Heizmittel SC vorhanden ist und in die mindestens zwei Spannteile (E) integriert ist.

6. Verfahren nach einem der Ansprüche 1 bis 4, **dadurch gekennzeichnet, dass** die mindestens zwei Spannteile (E) wärmeleitend sind und ein Heizmittel SC oberhalb der mindestens zwei Spannteile (E) vorhanden ist, mit dem sich das Fasermaterial und die mindestens zwei Spannteile (E) erwärmen lassen.

7. Verfahren nach Anspruch 5 oder 6, **dadurch gekennzeichnet, dass** die mindestens zwei Spannteile (E) wärmeleitend sind und ein Heizmittel SC1 vorhanden und in die mindestens zwei Spannteile (E) integriert ist und ein Heizmittel SC2 oberhalb der mindestens zwei Spannteile (E) vorhanden ist, mit dem sich das Fasermaterial und die mindestens zwei Spannteile (E) erwärmen lassen.

8. Verfahren nach einem der Ansprüche 1 bis 4, **dadurch gekennzeichnet, dass** die mindestens zwei Spannteile (E) nicht wärmeleitend sind und ein Heizmittel SC2 oberhalb der mindestens zwei Spannteile (E) vorhanden ist, mit dem sich das Fasermaterial erwärmen lässt.

9. Verfahren nach einem der Ansprüche 1 bis 8, **dadurch gekennzeichnet, dass** die mindestens zwei Spannteile (E) konvexe, konkave oder zylindrische, bevorzugt zylindrische, Druckrollen sind.

10. Verfahren nach Anspruch 9, **dadurch gekennzeichnet, dass** die Anzahl an Rollen im Kontakt mit dem Fasermaterial von 2 bis 20, insbesondere von 2 bis 12, insbesondere von 2 bis 9, vorzugsweise von 6 bis 9 beträgt.

11. Verfahren nach einem der Ansprüche 9 bis 10, **dadurch gekennzeichnet, dass** die Druckrollen eine Oberflächenbehandlung und/oder eine sichtbare Oberflächenrauheit aufweisen, mit der Reibung mit den Verstärkungsfasern auf ein Mindestmaß reduziert wird.

12. Verfahren nach einem der Ansprüche 9 bis 11, **dadurch gekennzeichnet, dass** die Rollen einen Abstand von unter 30 cm voneinander haben, insbesondere von D/2 + 1 mm bis 30 cm, wobei D der Rollendurchmesser ist.

13. Verfahren nach einem der Ansprüche 9 bis 12, **dadurch gekennzeichnet, dass** der Abstand zwischen der letzten Rolle und einer Kontaktstelle zwischen der Verstärkungsfaser und einem Element des nachfolgenden Verfahrens unter 30 cm beträgt.

14. Verfahren nach einem der Ansprüche 1 bis 12, **dadurch gekennzeichnet, dass** das thermoplastische Polymer ein nicht reaktives thermoplastisches Polymer ist.

15. Verfahren nach einem der Ansprüche 1 bis 14, **dadurch gekennzeichnet, dass** das mindestens eine thermoplastische Polymer der Matrix ausgewählt wird aus: Polyaryletherketonen (PAEK), insbesondere Polyetheretherketon (PEEK); Polyaryletherketonketonen (PAEKK), insbesondere Polyetherketonketon (PEKK); aromatischen Polyetherimiden (PEI); Polyarylsulfonen, insbesondere Polyphenylensulfonen (PPSU); Polyarylsulfiden, insbesondere Polyphenylensulfiden (PPS); Polyamiden (PA), insbesondere teilaromatischen Polyamiden (Polyphthalamiden), die gegebenenfalls mit Harnstoffeinheiten modifiziert sind; PEBA, Polyacrylaten, insbesondere Polymethylmethacrylat (PMMA) ; Polyolefinen, insbesondere Polypropylen, Polymilchsäure (PLA), Polyvinylalkohol (PVA) und fluorierten Polymeren, insbesondere Polyvinylidenfluorid (PVDF) oder Polytetrafluorethylen (PTFE) oder Polychlortrifluorethylen (PCTFE) und ihren Mischungen, insbesondere einer Mischung aus PEKK und PEI, bevorzugt 90-10 Gewichts-% bis 60-40 Gewichts-%, insbesondere 90-10 Gewichts-% bis 70-30 Gewichts-%.

16. Verwendung des Verfahrens nach einem der Ansprüche 1 bis 15 zur Herstellung von genau bemessenen Bändern, die für die Fertigung von dreidimensionalen Verbundbauteilen durch automatisiertes Ablegen der Bänder mit einem Roboter geeignet sind.

17. Verwendung nach Anspruch 16, **dadurch gekennzeichnet, dass** die Verbundbauteile den Bereich Transport, insbesondere mit Kraftfahrzeugen, von Erdöl und Erdgas, insbesondere Offshore, von Wasserstoff, den Bereich Gasspeicherung, insbesondere Speicherung von Wasserstoff, den Bereich Transport per Flugzeug, Schiff, Eisenbahn; erneuerbare Energien, insbesondere Windkraft, Wasserkraft, Energiespeichereinrichtungen, Solarmodule; Wärmeschutzplatten, Sport und Freizeit, Gesundheit, Medizin und Elektronik betreffen.

**Claims**

1. Method for manufacturing an impregnated fibrous material comprising a fibrous material made of continuous fibres and at least one thermoplastic polymer matrix, in which method said fibrous material is sized by a sizing thermoplastic polymer and has, before its pre-impregnation with said thermoplastic polymer, an initial width l, said method comprising a step of spreading said fibrous material before a pre-impregnation step, said spreading step being carried out by means of at least two tension devices (E) and at least one heating system SC for heating said tension devices and/or said fibrous material, said spreading, after said fibrous material has passed in contact with said tension devices, being between 1.5 and 5 times the initial width l, the spreading being consistent and always representing 1.5 to 5 times the initial width 1 when said fibrous material is placed in contact with said thermoplastic polymer matrix in the pre-impregnation system, the method being **characterized in that** said spread material is cooled below the Tg of the sizing thermoplastic polymer by means of a cooling system before it is placed in contact with said thermoplastic polymer matrix in the pre-impregnation system to carry out the pre-impregnation step.

2. Method according to Claim 1, **characterized in that** the heating system SC and the at least two tension devices (E) are located outside or inside the pre-impregnation system.

3. Method according to Claim 1 or 2, **characterized in that** the heating system SC and the at least two tension devices (E) are located outside the pre-impregnation system and said pre-impregnation step is carried out with a system chosen from among a fluidized bed, spraying through a nozzle, aqueous dispersion and the molten route, in particular at high speed, in particular pre-impregnation is carried out in a fluidized bed.

4. Method according to Claim 1 or 2, **characterized in that** the heating system SC and the at least two tension devices (E) are located inside the pre-impregnation system and said pre-impregnation step is carried out with a system chosen from among a fluidized bed, spraying through a nozzle and aqueous dispersion, in particular pre-impregnation is carried out in a fluidized bed.

5. Method according to one of Claims 1 to 4, **characterized in that** said at least two tension devices (E) conduct heat and a heating means SC is present and integrated in said at least two tension devices (E).

6. Method according to one of Claims 1 to 4, **characterized in that** said at least two tension devices (E) conduct heat and a heating means SC is present above said at least two tension devices (E) for heating the fibrous material and said at least two tension devices (E).

7. Method according to Claim 5 or 6, **characterized in that** said at least two tension devices (E) conduct heat and a heating means SC1 is present and integrated in said at least two tension devices (E) and a heating means SC2 is present above said at least two tension devices (E) for heating the fibrous material and said at least two tension devices (E).

8. Method according to one of Claims 1 to 4, **characterized in that** said at least two tension devices (E) do not conduct heat and a heating means SC2 is present above said at least two tension devices (E) for heating the fibrous material.

9. Method according to one of Claims 1 to 8, **characterized in that** the at least two tension devices (E) are compression rollers of convex, concave or cylindrical shape, preferably cylindrical.

10. Method according to Claim 9, **characterized in that** the number of rollers in contact with said fibrous material ranges from 2 to 20, in particular from 2 to 12, in particular from 2 to 9, preferably from 6 to 9.

11. Method according to either of Claims 9 and 10, **characterized in that** said compression rollers have a surface treatment and/or an apparent surface roughness minimizing friction with the reinforcing fibres.

12. Method according to one of Claims 9 to 11, **characterized in that** said rollers are separated from one another by a distance of less than 30 cm, in particular between D/2+1 mm and 30 cm, D being the diameter of the roller.

13. Method according to one of Claims 9 to 12, **characterized in that** the distance between the last roller and a point of contact between the reinforcing fibre and an element of the subsequent method is less than 30 cm.

14. Method according to one of Claims 1 to 12, **characterized in that** said thermoplastic polymer is a non-reactive thermoplastic polymer.

15. Method according to one of Claims 1 to 14, **characterized in that** said at least one thermoplastic polymer of the matrix is selected from: poly(aryl ether ketone)s (PAEKs), in particular poly(ether ether ketone) (PEEK); poly(aryl ether ketone ketone)s (PAEKKs), in particular poly(ether ketone ketone) (PEKK); aromatic polyetherimides (PEIs); polyaryl sulphones, in particular polyphenylene sulphones (PPSUs); polyaryl sulphides, in particular polyphenylene sulphides (PPSs); polyamides (PAs), in particular semiaromatic polyamides (polyphthalamides) optionally modified by urea moieties; PEBAs, polyacrylates, in particular polymethyl methacrylate (PMMA); polyolefins, in particular polypropylene, polylactic acid (PLA), polyvinyl alcohol (PVA), and fluoropolymers, in particular polyvinylidene fluoride (PVDF) or polytetrafluoroethylene (PTFE) or polychlorotrifluoroethylene (PCTFE); and blends thereof, especially a blend of PEKK and PEI, preferably from 90-10% by weight to 60-40% by weight, in particular from 90-10% by weight to 70-30% by weight.

16. Use of the method as defined in one of Claims 1 to 15, for the manufacture of calibrated tapes suitable for the manufacture of three-dimensional composite parts, by automated layup of said tapes using a robot.

17. Use according to Claim 16, **characterized in that** said composite parts relate to the fields of transport, in particular motor vehicle transport, of oil and gas, in particular offshore, of hydrogen, of gas storage, in particular hydrogen, and to the aeronautical, nautical and railroad transport fields; of renewable energy, in particular wind turbine or marine turbine, energy storage devices, solar panels; thermal protection panels; sports and leisure, health and medical, and electronics.

Figure 1

Figure 2

Figure 3

Figure 4

Figure 5

Figure 6

$$L^2 + L'^2 = ((D1+D2)/2+i)^2$$

Figure 7

EP 4 263 167 B1

RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1172191 A
- US 5895622 A
- EP 3170638 A
- WO 2018229114 A
- WO 2018234436 A
- WO 2018234439 A
- EP 2788408 A
- EP 1505099 A
- WO 2018115736 A
- WO 2015121583 A
- WO 2018115739 A
- US 20140005331 A1